(19) Europäisches Patentamt
European Patent Office
Office européen des brevets

(11) **EP 2 745 933 B1**

(12) **EUROPEAN PATENT SPECIFICATION**

(45) Date of publication and mention
of the grant of the patent:
**01.05.2019 Bulletin 2019/18**

(51) Int Cl.:
**B01J 29/85** (2006.01)   **B01D 53/86** (2006.01)
**B01D 53/94** (2006.01)   **B01J 35/04** (2006.01)
**B01J 35/06** (2006.01)   **B01J 35/10** (2006.01)
**B01J 37/00** (2006.01)   **B01J 37/08** (2006.01)
**B01J 37/30** (2006.01)   **C01B 37/08** (2006.01)
**C01B 39/54** (2006.01)   **B01J 35/02** (2006.01)

(21) Application number: **11870891.6**

(22) Date of filing: **18.08.2011**

(86) International application number:
**PCT/JP2011/068707**

(87) International publication number:
**WO 2013/024548 (21.02.2013 Gazette 2013/08)**

(54) **HONEYCOMB STRUCTURE, METHOD FOR MANUFACTURING THE SAME, EXHAUST GAS PURIFYING APPARATUS AND SILICOALUMINOPHOSPHATE PARTICLES**

WABENSTRUKTUR, HERSTELLUNGSVERFAHREN DAFÜR, ABGASREINIGUNGSVORRICHTUNG UND SILICOALUMINOPHOSPHATTEILCHEN

STRUCTURE EN NID D'ABEILLES, SON PROCÉDÉ DE FABRICATION, DISPOSITIF DE PURIFICATION DE GAZ D'ÉCHAPPEMENT ET PARTICULES DE SILICOALUMINOPHOSPHATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.06.2014 Bulletin 2014/26**

(73) Proprietor: **IBIDEN CO., LTD.**
**Ogaki-shi, Gifu 503-8604 (JP)**

(72) Inventors:
• **KUNIEDA, Masafumi**
**Ibi-Gun**
**Gifu 501-0695 (JP)**
• **NISHIO, Yoshitoyo**
**Ibi-Gun**
**Gifu 501-0695 (JP)**

(74) Representative: **Walcher, Armin**
**Louis, Pöhlau, Lohrentz**
**Patentanwälte**
**Postfach 30 55**
**90014 Nürnberg (DE)**

(56) References cited:
EP-A1- 2 324 916        JP-A- 2006 273 710
JP-A- 2011 125 846      JP-A- 2011 125 848
JP-A- 2011 125 849      JP-A- 2011 125 849
JP-A- 2011 125 851      JP-A- 2011 510 899
KR-A- 20080 114 232     US-A1- 2010 310 440
US-A1- 2010 310 440

• CAMPELO J M ET AL: "Hydroisomerization and hydrocracking of n-hexane on Pt/SAPO-5 and Pt/SAPO-11 catalysts", ZEOLITES, ELSEVIER SCIENCE PUBLISHING, US, vol. 15, no. 2, 2 February 1995 (1995-02-02), pages 97-103, XP004033640, ISSN: 0144-2449, DOI: 10.1016/0144-2449(94)00003-B

## Description

Technical Field

The present invention relates to a honeycomb structure, a method for manufacturing the honeycomb structure, an exhaust gas purifying apparatus and silicoaluminophosphate particles.

Background Art

In the related art, a selective catalytic reduction (SCR) system that reduces NOx into nitrogen and water using ammonia is known as one of many systems that purify exhaust gas from vehicles.

In addition, zeolite is known as a material that adsorbs ammonia in the selective catalytic reduction system.

PTL 1 discloses a honeycomb structure including a honeycomb unit that contains zeolite, an inorganic fiber and/or whisker, and an inorganic binder.

Meanwhile, SAPO-34 is known as zeolite having excellent NOx purification performance.

Citation List

Patent Literature

[PTL 1] PCT International Publication No. WO 06/137149 US 2010/0310440 A1 discloses a process for the direct synthesis of Cu containing silicoaluminophosphate (CU-SAPO-34). EP 2 324 916 A1 discloses a honeycomb structure and exhaust gas converter.

Summary of Invention

Technical Problem

However, SAPO-34 contracts or expands due to the adsorption or desorption of water, which causes a change in the lattice constant. Therefore, in the honeycomb structure including honeycomb unit that contains SAPO-34, there is a problem in that the honeycomb unit is easily broken due to SAPO-34 adsorbing or desorbing water.

The invention has been made in consideration of the problem of the related art, and an object of the invention is to provide a honeycomb structure that has excellent NOx purification performance and can suppress the breakage of a honeycomb unit due to the adsorption or desorption of water, a method for manufacturing the honeycomb structure, and an exhaust gas purifying apparatus including the honeycomb structure.

In addition, another object of the invention is to provide silicoaluminophosphate particles that have excellent NOx purification performance and can suppress water adsorption-caused contraction and water desorption-caused expansion.

Solution to Problem

According to the invention, there is provided a honeycomb structure including a honeycomb unit provided with a plurality of through holes arrayed in a longitudinal direction with a partition wall therebetween, wherein the honeycomb unit is produced by extruding and firing raw material paste containing silicoaluminophosphate particles and an inorganic binder, and wherein said silicoaluminophosphate particles have a ratio of an amount of Si to a sum of amounts of Al and P in a range of 0.22 to 0.26, a specific surface area in a range of 280 $m^2/g$ to 330 $m^2/g$, and an average diameter in a range of 3.5 $\mu m$ to 4.5 $\mu m$.

The silicoaluminophosphate particles are desirably ion-exchanged with copper ions and/or iron ions.

In the honeycomb unit, a content of the silicoaluminophosphate particles per apparent volume is desirably in a range of 230 g/L to 360 g/L. Meanwhile, the apparent volume refers to a volume of an outer circumference including a volume of voids.

The inorganic binder is desirably a solid content contained in one or more selected from a group consisting of an alumina sol, a silica sol, a titania sol, water glass, sepiolite, attapulgite and boehmite.

The raw material paste desirably further contains one or more selected from a group consisting of inorganic fibers, scale-like substances, tetrapot-like substances and three dimensional needle-like substances.

The inorganic fiber is desirably one or more selected from a group consisting of alumina, silica, silicon carbide, silica alumina, glass, potassium titanate and aluminum borate, the scale-like substance is desirably one or more selected from a group consisting of glass, muscovite, alumina and silica, the tetrapot-like substance is desirably zinc oxide, and the three dimensional needle-like substance is desirably one or more selected from a group consisting of alumina, silica, silicon carbide, silica alumina, glass, potassium titanate, aluminum borate and boehmite.

The honeycomb structure of the invention desirably includes a plurality of the honeycomb units.

In the honeycomb structure of the invention, a NOx purification rate is desirably 85% or more in a case in which 200°C-hot simulant gas is made to flow into the honeycomb structure so that a space velocity becomes 80000/h, the space velocity is desirably a ratio of a flow rate $[m^3/h]$ of the simulant gas to an apparent volume $[m^3]$ of the honeycomb structure, and the simulant gas desirably contains nitrogen monoxide at a concentration of 350 ppm, ammonia at a concentration of 350 ppm, oxygen at a concentration of 10%, water at a concentration of 5% and carbon dioxide at a concentration of 5% with a balance of nitrogen.

According to the invention, there is provided a method for manufacturing a honeycomb structure including a honeycomb unit provided with a plurality of through holes arrayed in a longitudinal direction with a partition wall therebetween. The method includes a step of extruding raw material paste containing silicoaluminophosphate particles and an inorganic binder; and a step of firing the extruded raw material paste so as to produce the honeycomb unit, wherein the silicoaluminophosphate particles have a ratio of an amount of Si to a sum of amounts of Al and P in a range of 0.22 to 0.26, a specific surface area in a range of 280 $m^2/g$ to 330 $m^2/g$, and an average diameter in a range of 3.5 $\mu m$ to 4.5 $\mu m$.

In an atmosphere in which the extruded raw material paste is fired, a concentration of oxygen is in a range of 1% to 10%, a temperature at which the extruded raw material paste is fired is in a range of 600°C to 1000°C, and a time during which the extruded raw material paste is fired is in a range of 7 hours to 10 hours.

Not according to the invention, there is provided an exhaust gas purifying apparatus accommodated in a metal container in a state in which a holding seal material is disposed on an outer circumferential surface of the honeycomb structure excluding both end surfaces.

According to the invention, there are provided silicoaluminophosphate particles wherein a ratio of an amount of Si to a sum of amounts of Al and P is in a range of 0.22 to 0.26, a specific surface area is in a range of 280 $m^2/g$ to 330 $m^2/g$, and an average diameter of original silicoaluminophosphate particles is in a range of 3.5 $\mu m$ to 4.5 $\mu m$.

Advantageous Effects of Invention

According to the invention, it is possible to provide a honeycomb structure that has excellent NOx purification performance and can suppress the breakage of a honeycomb unit due to the adsorption or desorption of water, a method for manufacturing the honeycomb structure, and an exhaust gas purifying apparatus including the honeycomb structure.

In addition, according to the invention, it is possible to provide silicoaluminophosphate particles that have excellent NOx purification performance and can suppress water adsorption-caused contraction and water desorption-caused expansion.

Brief Description of Drawings

Fig. 1 is a perspective view illustrating an example of a honeycomb structure of the invention.
Fig. 2 is a cross-sectional view illustrating an example of an exhaust gas purifying apparatus of the invention.
Fig. 3 is a perspective view illustrating another example of the honeycomb structure of the invention.
Fig. 4 is a perspective view illustrating a honeycomb unit that configures the honeycomb structure of Fig. 3.
Fig. 5 is a perspective view illustrating another example of the honeycomb structure of the invention.
Fig. 6 is a perspective view illustrating a honeycomb unit that configures the honeycomb structure of Fig. 5.

Description of Embodiments

Next, embodiments for carrying out the invention will be described with reference to the accompanying drawings.

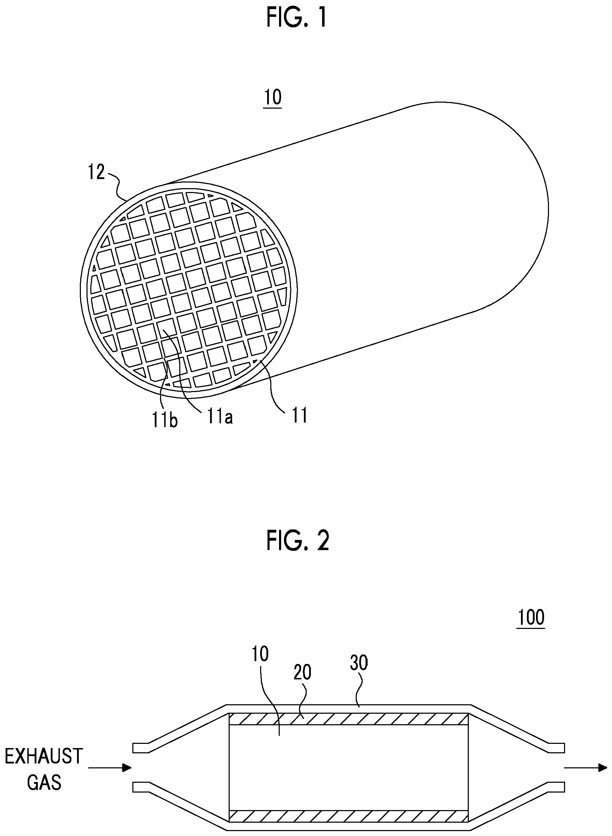

Fig. 1 illustrates an example of a honeycomb structure of the invention. A honeycomb structure 10 includes a sole honeycomb unit 11 provided with a plurality of through holes 11a arrayed in a longitudinal direction with a partition wall 11b therebetween. In addition, the honeycomb unit 11 is produced by extruding and firing raw material paste containing silicoaluminophosphate (SAPO) particles and an inorganic binder. Furthermore, an outer circumference coating layer 12 is formed on an outer circumferential surface of the honeycomb unit 11 excluding both end surfaces.

Hereinafter, the silicoaluminophosphate particles refer to the silicoaluminophosphate particles contained in the raw material paste.

In the silicoaluminophosphate particles, the ratio of the amount of Si to the sum of the amounts of Al and P is in a range of 0.22 to 0.26. When the ratio of the amount of Si to the sum of the amounts of Al and P in the silicoaluminophosphate particles is less than 0.16, it becomes difficult to suppress the water adsorption-caused contraction and water desorption-caused expansion of the silicoaluminophosphate particles. On the other hand, when the ratio of the amount of Si to the sum of the amounts of Al and P in the silicoaluminophosphate particles exceeds 0.33, the silicoaluminophosphate particles become

amorphous, and it becomes difficult to produce the honeycomb unit 11.

Meanwhile, as the unit of the amount in the invention, 'mol' is used, and the ratio (molar ratio) of the amount [mol] of Si to the sum of the amounts [mol] of Al and P in the silicoaluminophosphate particles can be measured using energy dispersive X-ray spectroscopy (EDS).

The specific surface area of the silicoaluminophosphate particles is in a range of 280 $m^2/g$ to 330 $m^2/g$. When the specific surface area of the silicoaluminophosphate particles is less than 200 $m^2/g$, since the number of pores in the honeycomb unit 11 decreases, exhaust gas cannot easily infiltrate into an inside of the partition wall 11b in the honeycomb unit 11, and it becomes impossible to effectively use the silicoaluminophosphate particles for NOx purification. On the other hand, when the specific surface area of the silicoaluminophosphate particles exceeds 400 $m^2/g$, it becomes difficult to suppress the water adsorption-caused contraction and water desorption-caused expansion of the silicoaluminophosphate particles.

Generally, the specific surface area of the silicoaluminophosphate particles is approximately 500 $m^2/g$; however, in the invention, it is possible to set the specific surface area of the silicoaluminophosphate particles to 400 $m^2/g$ or less by carrying out an alkali treatment on the silicoaluminophosphate particles so as to make some of crystals amorphous.

An alkali used in the alkali treatment is not particularly limited, and examples thereof include ammonia, sodium hydroxide and the like.

Meanwhile, the specific surface area of the silicoaluminophosphate particles can be measured using a BET multipoint method ($N_2$ adsorption method). In addition, when the specific surface area of the silicoaluminophosphate particles is measured, for example, an automatic surface area and porosimetry analyzer TriStar-3000 (manufactured by Shimadzu Corporation) can be used.

The average diameter of original silicoaluminophosphate particles of the silicoaluminophosphate particles is in a range of 3.5 $\mu$m to 4.5 $\mu$m. When the average diameter of original silicoaluminophosphate particles of the silicoaluminophosphate particles is less than 2.0 $\mu$m, exhaust gas cannot easily infiltrate into the inside of the partition wall 11b, and it becomes impossible to effectively use the silicoaluminophosphate particles for NOx purification. On the other hand, when the average diameter of original silicoaluminophosphate particles of the silicoaluminophosphate particles exceeds 6.0 $\mu$m, the porosity of the honeycomb unit 11 increases such that the strength of the honeycomb unit 11 decreases or the specific surface area of the silicoaluminophosphate particles decreases such that NOx purification performance degrades.

Generally, the average diameter of original silicoaluminophosphate particles of the silicoaluminophosphate particles is approximately 20 $\mu$m, but the average diameter of original silicoaluminophosphate particles can be decreased by crushing the silicoaluminophosphate particles.

Meanwhile, the average diameter of original silicoaluminophosphate particles of the silicoaluminophosphate particles can be measured using a laser diffraction-type particle size distribution analyzer.

The silicoaluminophosphate particles have a ratio of the amount of Si to the sum of the amounts of Al and P in a range of 0.22 to 0.26, a specific surface area in a range of 280 $m^2/g$ to 330 $m^2/g$, and an average diameter of original silicoaluminophosphate particles in a range of 3.5 $\mu$m to 4.5 $\mu$m. Then, it is possible to obtain a honeycomb structure 10 that has excellent NOx purification performance and can further suppress the breakage of a honeycomb unit due to the adsorption or desorption of water.

The silicoaluminophosphate particles can be produced by adding phosphoric acid, aluminum hydroxide, silica and a structure directing agent (SDA) to water so as to produce a precursor gel, and then carrying out heating and an alkali treatment on the precursor gel.

Meanwhile, the structure directing agent refers to a mold used to form a fine regular structure when producing the silicoaluminophosphate particles.

At this time, it is possible to control the ratio of the amount of Si to the sum of the amounts of Al and P in the silicoaluminophosphate particles by adjusting the ratio of the amount of silica to the sum of the amounts of the phosphoric acid and the aluminum hydroxide. In addition, it is possible to control the specific surface area of the silicoaluminophosphate particles by adjusting the condition for the alkali treatment.

The structure directing agent is not particularly limited, examples thereof include morpholine, diethylamine, tetraethylammonium hydroxide, triethylamine and the like, and two or more structure directing agents may be jointly used.

The silicoaluminophosphate particles are preferably ion-exchanged with copper ions and/or iron ions in consideration of NOx purification performance.

In the silicoaluminophosphate particles being ion-exchanged with copper ions and/or iron ions, the ion exchange amount is preferably in a range of 1.0% by mass to 5.0% by mass. When the ion exchange amount of the silicoaluminophosphate particles is less than 1.0% by mass, the effect that improves NOx purification performance becomes small. On the other hand, when the ion exchange amount of the silicoaluminophosphate particles exceeds 5.0% by mass, hydrothermal durability degrades, and NOx purification performance degrades at a high temperature of, for example, 500°C or higher.

Meanwhile, the silicoaluminophosphate particles may be ion-exchanged with other metallic ions.

In the honeycomb unit 11, the content of the silicoaluminophosphate particles per apparent volume is preferably in a range of 230 g/L to 360 g/L. When the content of the silicoaluminophosphate particles per apparent volume of the honeycomb unit 11 is less than 230 g/L, it is necessary to increase the apparent volume of the honeycomb unit 11 in order to improve NOx purification performance. On the other hand, when the content of the silicoaluminophosphate particles per apparent volume of the honeycomb unit 11 exceeds 360 g/L, the strength of the honeycomb unit 11 becomes insufficient, or the aperture ratio of the honeycomb unit 11 becomes small.

Meanwhile, the apparent volume refers to the volume of the outer circumference including the volume of voids.

The inorganic binder contained in the raw material paste is not particularly limited, examples thereof include solid contents contained in an alumina sol, a silica sol, a titania sol, water glass, sepiolite, attapulgite, boehmite and the like, and two or more inorganic binders may be jointly used.

The content of the inorganic binder contained in the solid content of the raw material paste is preferably in a range of 5% by mass to 30% by mass, and more preferably in a range of 10% by mass to 20% by mass. When the content of the inorganic binder in the solid content of the raw material paste is less than 5% by mass, the strength of the honeycomb unit 11 decreases. On the other hand, when the content of the solid content of the inorganic binder contained in the solid content of the raw material paste exceeds 30% by mass, it becomes difficult to extrude the honeycomb unit 11.

The raw material paste preferably further contains one or more selected from a group consisting of inorganic fibers, scale-like substances, tetrapot-like substances and three dimensional needle-like substances in order to improve the strength of the honeycomb unit 11.

A material that configures the inorganic fiber contained in the raw material paste is not particularly limited, examples thereof include alumina, silica, silicon carbide, silica alumina, glass, potassium titanate, aluminum borate and the like, and two or more materials may be jointly used.

The aspect ratio of the inorganic fiber contained in the raw material paste is preferably in a range of 2 to 1000, more preferably in a range of 5 to 800, and still more preferably in a range of 10 to 500. When the aspect ratio of the inorganic fiber contained in the raw material paste is smaller than 2, the effect that improves the strength of the honeycomb unit 11 becomes small. On the other hand, when the aspect ratio of the inorganic fiber contained in the raw material paste exceeds 1000, clogging and the like occur in a mold when extruding the honeycomb unit 11 or the inorganic fiber breaks such that the effect that improves the strength of the honeycomb unit 11 becomes small.

The scale-like substance refers to a flat substance, the thickness is preferably in a range of 0.2 $\mu$m to 5.0 $\mu$m, the maximum length is preferably in a range of 10 $\mu$m to 160 $\mu$m, and the ratio of the maximum length to the thickness is preferably in a range of 3 to 250.

A material that configures the scale-like substance contained in the raw material paste is not particularly limited, examples thereof include glass, muscovite, alumina, silica and the like, and two or more materials may be jointly used.

The tetrapot-like substance refers to a substance in which a needle-like portion three-dimensionally extends, the average length of the needle shapes in the needle-like portion is preferably in a range of 5 $\mu$m to 30 $\mu$m, and the average diameter of the needle-like portion is preferably in a range of 0.5 $\mu$m to 5.0 $\mu$m.

A material that configures the tetrapot-like substance contained in the raw material paste is not particularly limited, examples thereof include zinc oxide, and two or more materials may be jointly used.

The three dimensional needle-like substance refers to a substance in which needle-like portions are bonded to each other near the centers of the respective needle-like portions through an inorganic compound such as glass, the average length of the needle shapes in the needle-like portion is preferably in a range of 5 $\mu$m to 30 $\mu$m, and the average diameter of the needle-like portion is preferably in a range of 0.5 $\mu$m to 5.0 $\mu$m.

In addition, in the three dimensional needle-like substance, a plurality of needle-like portions may be connected to each other three-dimensionally, the diameter of the needle-like portion is preferably in a range of 0.1 $\mu$m to 5.0 $\mu$m, the length is preferably in a range of 0.3 $\mu$m to 30.0 $\mu$m, and the ratio of the length to the diameter is preferably in a range of 1.4 to 50.0.

A material that configures the three dimensional needle-like substance contained in the raw material paste is not particularly limited, examples thereof include alumina, silica, silicon carbide, silica alumina, glass, potassium titanate, aluminum borate, boehmite and the like, and two or more materials may be jointly used.

The content of the inorganic fibers, the scale-like substances, the tetrapot-like substances and the three dimensional needle-like substances in the solid content of the raw material paste is preferably in a range of 3% by mass to 50% by mass, more preferably in a range of 3% by mass to 30% by mass, and still more preferably in a range of 5% by mass to 20% by mass. When the content of the inorganic fibers, the scale-like substances, the tetrapot-like substances and the three dimensional needle-like substances in the solid content of the raw material paste is less than 3% by mass, the effect that improves the strength of the honeycomb unit 11 becomes small. On the other hand, when the content of the inorganic fibers, the scale-like substances, the tetrapot-like substances and the three dimensional needle-like substances in the solid content of the raw material paste exceeds 50% by mass, the content of the silicoaluminophosphate particles in the honeycomb unit 11 decreases, and NOx purification performance degrades.

The porosity of the honeycomb unit 11 is preferably in a range of 40% to 60%. When the porosity of the honeycomb unit 11 is less than 40%, exhaust gas cannot easily infiltrate into the inside of the partition wall 11b, and it becomes impossible to effectively use the silicoaluminophosphate particles for NOx purification. On the other hand, when the porosity of the honeycomb unit 11 exceeds 60%, the strength of the honeycomb unit 11 becomes insufficient.

Meanwhile, the porosity of the honeycomb unit 11 can be measured using a mercury intrusion method.

The porosity of the honeycomb unit 11 in a cross-section vertical to the longitudinal direction is preferably in a range of 50% to 75%. When the porosity of the honeycomb unit 11 in a cross-section vertical to the longitudinal direction is less than 50%, it becomes impossible to effectively use the silicoaluminophosphate particles for NOx purification. On the other hand, when the porosity of the honeycomb unit 11 in a cross-section vertical to the longitudinal direction exceeds 75%, the strength of the honeycomb unit 11 becomes insufficient.

The density of the through holes 11a in the honeycomb unit 11 on a cross-section vertical to the longitudinal direction is preferably in a range of 31 holes/cm$^2$ to 155 holes/cm$^2$. When the density of the through holes 11a in the honeycomb unit 11 on a cross-section vertical to the longitudinal direction is less than 31 holes/cm$^2$, it becomes difficult for the silicoaluminophosphate particles to come into contact with exhaust gas, and NOx purification performance degrades. On the other hand, when the density of the through holes 11a in the honeycomb unit 11 on a cross-section vertical to the longitudinal direction exceeds 155 holes/cm$^2$, the pressure loss of the honeycomb structure 10 increases.

The thickness of the partition wall 11b in the honeycomb unit 11 is preferably in a range of 0.10 mm to 0.50 mm, and more preferably in a range of 0.15 mm to 0.35 mm. When the thickness of the partition wall 11b is less than 0.10 mm, the strength of the honeycomb unit 11 decreases. On the other hand, when the thickness of the partition wall 11b exceeds 0.50 mm, exhaust gas cannot easily infiltrate into the inside of the partition wall 11b, and it becomes impossible to effectively use the silicoaluminophosphate particles for NOx purification.

The thickness of the outer circumference coating layer 12 is preferably in a range of 0.1 mm to 2.0 mm. When the thickness of the outer circumference coating layer 12 is less than 0.1 mm, the effect that improves the strength of the honeycomb structure 10 becomes insufficient. On the other hand, when the thickness of the outer circumference coating layer 12 exceeds 2.0 mm, the content of the silicoaluminophosphate particles per unit volume of the honeycomb structure 10 decreases such that NOx purification performance degrades.

The shape of the honeycomb structure 10 is not limited to a circular column shape, and examples thereof include a rectangular column shape, an oval column shape, a long circular column shape, a round-chamferred rectangular column shape (for example, a round-chamferred triangular column shape) and the like.

The shape of the through hole 11a is not limited to a rectangular column shape, and examples thereof include a triangular column shape, a hexagonal column shape and the like.

In the honeycomb structure 10, the NOx purification rate is preferably 85% or more in a case in which 200°C-hot simulant gas is made to flow so that the space velocity becomes 80000/h. At this time, the space velocity refers to the ratio of the flow rate [m$^3$/h] of the simulant gas to the apparent volume [m$^3$] of the honeycomb structure 10, and the simulant gas contains nitrogen monoxide at a concentration of 350 ppm, ammonia at a concentration of 350 ppm, oxygen at a concentration of 10%, water at a concentration of 5% and carbon dioxide at a concentration of 5% with a balance of nitrogen.

Next, an example of the method for manufacturing the honeycomb structure 10 will be described. First, raw material paste containing the silicoaluminophosphate particles and the inorganic binder, and, furthermore, one or more selected from a group consisting of inorganic fibers, scale-like substances, tetrapot-like substances and three dimensional needle-like substances as necessary is extruded, thereby producing a circular column-shaped honeycomb compact provided with a plurality of through holes arrayed in the longitudinal direction with a partition wall therebetween.

At this time, the raw material paste may further contain an organic binder, a dispersion medium, a molding assistant and the like as necessary.

The organic binder is not particularly limited, examples thereof include methyl cellulose, carboxymethyl cellulose, hydroxyethyl cellulose, polyethylene glycol, phenol resins, epoxy resins and the like, and two or more organic binders may be jointly used.

The content of the organic binder in the raw material paste is preferably in a range of 1% by mass to 10% by mass with respect to the total amount of the silicoaluminophosphate particles, the inorganic binder, the inorganic fiber, the scale-like substance, the tetrapot-like substance and the three dimensional needle-like substance.

The dispersion medium is not particularly limited, examples thereof include water, organic solvents such as benzene, alcohols such as methanol, and the like, and two or more dispersion media may be jointly used.

The molding assistant is not particularly limited, examples thereof include ethylene glycol, dextrin, aliphatic acids, aliphatic soap, polyalcohols and the like, and two or more molding assistants may be jointly used.

When preparing the raw material paste, the components are preferably mixed and kneaded. The components may be mixed using a mixer, an attritor or the like, and may be kneaded using a kneader or the like.

Next, the honeycomb compact is dried using a dryer such as a microwave dryer, a hot air dryer, a dielectric dryer, a reduced-pressure dryer, a vacuum dryer or a freeze dryer, thereby producing a dried honeycomb.

Furthermore, the dried honeycomb is defatted, thereby producing a defatted honeycomb. The defatting conditions can be appropriately selected depending on the kinds and amounts of organic substances contained in the dried honeycomb, and the dried honeycomb is preferably defatted at 400°C for 2 hours.

Next, the defatted honeycomb is fired, thereby producing a circular column-shaped honeycomb unit 11.

In the firing atmosphere, the concentration of oxygen is preferably in a range of 1% to 10%. When the concentration of oxygen is less than 1% in the firing atmosphere, organic substances in the defatted honeycomb are not sufficiently oxidized and remain, and the strength of the honeycomb unit 11 decreases. On the other hand, when the concentration of oxygen exceeds 10% in the firing atmosphere, organic substances in the defatted honeycomb are combusted.

The firing temperature is preferably in a range of 600°C to 1000°C, and the firing time is preferably in a range of 7 hours to 10 hours. In a case in which the firing temperature is lower than 600°C or the firing time is shorter than 7 hours, sintering does not proceed, and the strength of the honeycomb unit 11 decreases. On the other hand, in a case in which the firing temperature exceeds 1000°C or the firing time exceeds 10 hours, sintering excessively proceeds such that the number of reaction sites of the silicoaluminophosphate particles decreases.

Next, paste for outer circumference coating layers is applied to the outer circumferential surface of the circular column-shaped honeycomb unit 11 excluding both end surfaces.

The paste for outer circumference coating layers is not particularly limited, and examples thereof include mixtures of an inorganic binder and inorganic particles, mixtures of an inorganic binder and an inorganic fiber, mixtures of an inorganic binder, inorganic particles and an inorganic fiber, and the like.

The inorganic binder contained in the paste for outer circumference coating layers is not particularly limited, examples thereof include solid content contained in a silica sol, an alumina sol or the like, and two or more inorganic binders may be jointly used. Among the above, the solid content contained in silica sol is preferable.

A material that configures the inorganic particles contained in the paste for outer circumference coating layers is not particularly limited, examples thereof include carbides such as silicon carbide, nitrides such as silicon nitride and boron nitride, and the like, and two or more inorganic particles may be jointly used. Among the above, silicon carbide is preferable due to the excellent thermal conductivity.

A material that configures the inorganic fiber contained in the paste for outer circumference coating layers is not particularly limited, examples thereof include silica alumina, mullite, alumina, silica and the like, and two or more inorganic fibers may be jointly used. Among the above, alumina is preferable.

The paste for outer circumference coating layers may further contain an organic binder.

The organic binder contained in the paste for outer circumference coating layers is not particularly limited, examples thereof include polyvinyl alcohol, methyl cellulose, ethyl cellulose, carboxymethyl cellulose and the like, and two or more organic binders may be jointly used.

The paste for outer circumference coating layers may further contain a balloon that is a minute hollow sphere of an oxide-based ceramic, a pore-forming agent and the like.

The balloon contained in the paste for outer circumference coating layers is not particularly limited, examples thereof include alumina balloons, glass micro balloons, shirasu balloons, fly ash balloons, mullite balloons and the like, and two or more balloons may be jointly used. Among the above, alumina balloons are preferable.

The pore-forming agent contained in the paste for outer circumference coating layers is not particularly limited, examples thereof include spherical acrylic particles, graphite and the like, and two or more pore-forming agents may be jointly used.

Next, the honeycomb unit 11 to which the paste for outer circumference coating layers has been applied is dried and solidified, thereby producing a circular column-shaped honeycomb structure 10. At this time, in a case in which the paste for outer circumference coating layers contains the organic binder, the paste for outer circumference coating layers is preferably defatted. The defatting conditions can be appropriately selected depending on the kinds and amounts of organic substances, and the paste for outer circumference coating layers is preferably defatted at 600°C for 1 hour.

Meanwhile, the silicoaluminophosphate particles can be ion-exchanged by immersing the honeycomb unit 11 in an aqueous solution containing copper ions and/or iron ions.

In addition, raw material paste containing silicoaluminophosphate particles which have been ion-exchanged with copper ions and/or iron ions may also be used.

Fig. 2 illustrates an example of the exhaust gas purifying apparatus of the invention. In an exhaust gas purifying apparatus 100, the honeycomb structure 10 is accommodated in a metal container (shell) 30 in a state in which a holding seal material 20 is disposed on the outer circumferential surface of the honeycomb structure excluding both end surfaces. In addition, in the exhaust gas purifying apparatus 100, spraying means (not illustrated) such as a spraying nozzle that sprays ammonia or a compound that generates ammonia when being decomposed is installed in a pipe (not illustrated) in the upper stream side of the honeycomb structure 10 in a direction in which exhaust gas flows. Thereby, ammonia is added to exhaust gas flowing in the pipe, and therefore NOx contained in the exhaust gas is reduced by the silicoaluminophosphate particles contained in the honeycomb unit 11.

The compound that generates ammonia when being decomposed is not particularly limited as long as the compound is heated by exhaust gas in the pipe so as to generate ammonia, but aqueous urea is preferable due to the excellent storage stability.

The aqueous urea is heated by exhaust gas in the pipe and decomposed, thereby generating ammonia.

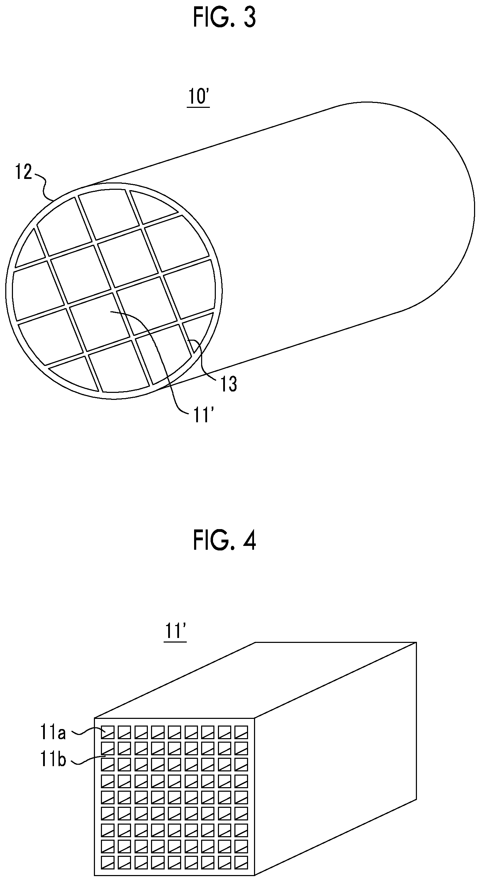

Fig. 3 illustrates another example of the honeycomb structure of the invention. Meanwhile, a honeycomb structure 10' has the same configuration as the honeycomb structure 10 except that a plurality of honeycomb units 11' (refer to Fig. 4) provided with a plurality of the through holes 11a arrayed in a longitudinal direction with the partition wall 11b therebetween is adhered to each other through an adhesion layer 13.

The cross-sectional area of a cross-section of the honeycomb unit 11' vertical to the longitudinal direction is preferably in a range of 5 cm$^2$ to 50 cm$^2$. When the cross-sectional area of a cross-section of the honeycomb unit 11' vertical to the longitudinal direction is smaller than 5 cm$^2$, the pressure loss of the honeycomb structure 10' increases. On the other hand, when the cross-sectional area of a cross-section of the honeycomb unit 11' vertical to the longitudinal direction exceeds 50 cm$^2$, the strength against thermal stress generated in the honeycomb unit 11' becomes insufficient.

Except for the honeycomb units 11' located in an outer circumferential portion of the honeycomb structure 10', the shape of the honeycomb unit 11' is not limited to a rectangular column shape, and examples thereof include a hexagonal column shape and the like.

Meanwhile, the honeycomb unit 11' has the same configuration as the honeycomb unit 11 except for the cross-sectional area of a cross-section vertical to the longitudinal direction and the shape.

The thickness of the adhesion layer 13 is preferably in a range of 0.5 mm to 2.0 mm. When the thickness of the adhesion layer 13 is less than 0.5 mm, the adhesion strength of the honeycomb unit 11' becomes insufficient. On the other hand, when the thickness of the adhesion layer 13 exceeds 2.0 mm, the pressure loss of the honeycomb structure 10' increases.

Next, an example of the method for manufacturing the honeycomb structure 10' will be described. First, similarly to the honeycomb structure 10, rectangular column-shaped honeycomb units 11' are produced. Next, paste for the adhesion layer is applied to the outer circumferential surfaces of a plurality of the honeycomb units 11' excluding both end surfaces, the honeycomb units are adhered to each other, then, dried and solidified, thereby producing a collection of the honeycomb units 11'.

The paste for the adhesion layer is not particularly limited, and examples thereof include mixtures of an inorganic binder and inorganic particles, mixtures of an inorganic binder and an inorganic fiber, mixtures of an inorganic binder, inorganic particles and an inorganic fiber, and the like.

The organic binder contained in the paste for the adhesion layer is not particularly limited, examples thereof include solid content contained in a silica sol, an alumina sol or the like, and two or more inorganic binders may be jointly used. Among the above, the solid content contained in silica sol is preferable.

A material that configures the inorganic particles contained in the paste for the adhesion layer is not particularly limited, examples thereof include carbides such as silicon carbide, nitrides such as silicon nitride and boron nitride, and the like, and two or more inorganic particles may be jointly used. Among the above, silicon carbide is preferable due to the excellent thermal conductivity.

A material that configures the inorganic fiber contained in the paste for the adhesion layer is not particularly limited, examples thereof include silica alumina, mullite, alumina, silica and the like, and two or more inorganic fibers may be jointly used. Among the above, alumina is preferable.

In addition, the paste for the adhesion layer may further contain an organic binder.

The organic binder contained in the paste for the adhesion layer is not particularly limited, examples thereof include polyvinyl alcohol, methyl cellulose, ethyl cellulose, carboxymethyl cellulose and the like, and two or more organic binders may be jointly used.

The paste for the adhesion layer may further contain a balloon that is a minute hollow sphere of an oxide-based ceramic, a pore-forming agent and the like.

The balloon contained in the paste for the adhesion layer is not particularly limited, examples thereof include alumina balloons, glass micro balloons, shirasu balloons, fly ash balloons, mullite balloons and the like, and two or more balloons may be jointly used. Among the above, alumina balloons are preferable.

The pore-forming agent contained in the paste for the adhesion layer is not particularly limited, examples thereof include spherical acrylic particles, graphite and the like, and two or more pore-forming agents may be jointly used.

Next, the collection of the honeycomb units 11' is cut into a circular column shape, and then ground as necessary, thereby producing a circular column-shaped collection of the honeycomb units 11'.

Meanwhile, instead of cutting the collection of the honeycomb units 11' into a circular column shape, it is also possible to adhere the honeycomb units 11' to honeycomb units having a predetermined cross-sectional shape vertical to the longitudinal direction, thereby producing a circular column-shaped collection of the honeycomb units.

Next, paste for outer circumference coating layers is applied to the outer circumferential surfaces of the circular column-shaped collection of the honeycomb units 11' excluding both end surfaces.

The paste for outer circumference coating layers may be the same as or different from the paste for the adhesion layer.

Next, the circular column-shaped collection of the honeycomb units 11' to which the paste for outer circumference coating layers has been applied is dried and solidified, thereby producing a circular column-shaped honeycomb structure 10'. At this time, in a case in which the paste for the adhesion layer and/or the paste for outer circumference coating layers contain the organic binder, the paste is preferably defatted. The defatting conditions can be appropriately selected depending on the kinds and amounts of organic substances, and the paste is preferably defatted at 600°C for 1 hour.

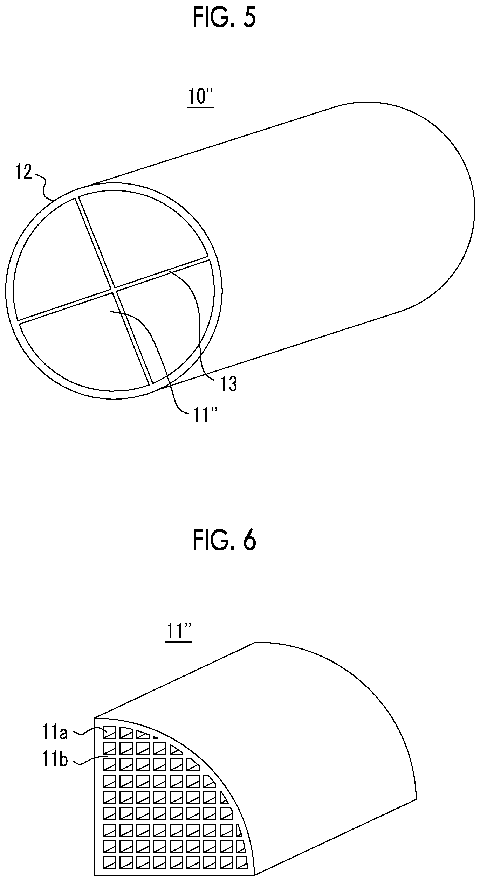

Fig. 5 illustrates another example of the honeycomb structure of the invention. Meanwhile, the honeycomb structure 10" has the same configuration as the honeycomb structure 10' except that four honeycomb units 11" having a cross-sectional shape vertical to the longitudinal direction which is shaped like a fan with a center angle of 90 degrees are adhered to each other (refer to Fig. 6).

Meanwhile, the honeycomb structures 10, 10' and 10" may not have the outer circumference coating layer 12 formed therein.

Examples

In the present examples, 'parts' refer to 'parts by mass'.

[Example 1, not according to the invention]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (5.5 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 4.0 $\mu$m, and treating the silicoaluminophosphate particles in an aqueous solution of ammonia with a concentration of 5% by mass for 30 minutes, the ratio of the amount of Si to the sum of the amounts of Al and P was 0.16, and the specific surface area was 320 $m^2$/g.

[Example 2, not according to the invention]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (5.5 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 2.0 $\mu$m, and treating the silicoaluminophosphate particles in an aqueous solution of ammonia with a concentration of 3% by mass for 50 minutes, the ratio of the amount of Si to the sum of the amounts of Al and P was 0.16, and the specific surface area was 355 $m^2$/g.

[Example 3, not according to the invention]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (5.5 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 6.0 $\mu$m, and treating the silicoaluminophosphate particles in an aqueous solution of ammonia with a concentration of 5% by mass for 30 minutes, the ratio of the amount of Si to the sum of the amounts of Al and P was 0.16, and the specific surface area was 310 $m^2$/g.

[Example 4, not according to the invention]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (5.5 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 4.0 μm, and treating the silicoaluminophosphate particles in an aqueous solution of ammonia with a concentration of 5% by mass for 60 minutes, the ratio of the amount of Si to the sum of the amounts of Al and P was 0.16, and the specific surface area was 210 m²/g.

[Example 5]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (8.2 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 4.0 μm, and treating the silicoaluminophosphate particles in an aqueous solution of ammonia with a concentration of 3% by mass for 60 minutes, the ratio of the amount of Si to the sum of the amounts of Al and P was 0.24, and the specific surface area was 330 m²/g.

[Example 6, not according to the invention]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (8.2 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 6.0 μm, and treating the silicoaluminophosphate particles in an aqueous solution of ammonia with a concentration of 5% by mass for 40 minutes, the ratio of the amount of Si to the sum of the amounts of Al and P was 0.24, and the specific surface area was 280 m²/g.

[Example 7, not according to the invention]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (9.6 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 2.0 μm, and treating the silicoaluminophosphate particles in an aqueous solution of ammonia with a concentration of 3% by mass for 40 minutes, the ratio of the amount of Si to the sum of the amounts of Al and P was 0.28, and the specific surface area was 385 m²/g.

[Comparative Example 1]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (5.1 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 4.0 $\mu$m, and treating the silicoalumi-nophosphate particles in an aqueous solution of ammonia with a concentration of 3% by mass for 30 minutes, the ratio of the amount of Si to the sum of the amounts of Al and P was 0.15, and the specific surface area was 420 m$^2$/g.

[Comparative Example 2]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (5.1 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 4.0 $\mu$m, and treating the silicoalumi-nophosphate particles in an aqueous solution of ammonia with a concentration of 3% by mass for 50 minutes, the ratio of the amount of Si to the sum of the amounts of Al and P was 0.15, and the specific surface area was 345 m$^2$/g.

[Comparative Example 3]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (5.5 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 4.0 $\mu$m, and treating the silicoalumi-nophosphate particles in an aqueous solution of ammonia with a concentration of 3% by mass for 30 minutes, the ratio of the amount of Si to the sum of the amounts of Al and P was 0.16, and the specific surface area was 415 m$^2$/g.

[Comparative Example 4]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (5.5 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 1.0 $\mu$m, and treating the silicoalumi-nophosphate particles in an aqueous solution of ammonia with a concentration of 5% by mass for 30 minutes, the ratio of the amount of Si to the sum of the amounts of Al and P was 0.16, and the specific surface area was 320 m$^2$/g.

[Comparative Example 5]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (8.2 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 8.0 $\mu$m, and treating the silicoalumi-nophosphate particles in an aqueous solution of ammonia with a concentration of 5% by mass for 40 minutes, the ratio of the amount of Si to the sum of the amounts of Al and P was 0.24, and the specific surface area was 287 m$^2$/g.

[Comparative Example 6]

An aqueous solution of phosphoric acid with a concentration of 85% by mass (9.8 parts), an aqueous solution of aluminum hydroxide with a concentration of 95% by mass (7.0 parts), a silica sol containing 30% by mass of a solid content (9.6 parts) and morpholine (11.3 parts) as a structure directing agent were sequentially added to water, and stirred, thereby obtaining a precursor gel. Next, the precursor gel was sealed in an autoclave (200 ml), heated to 200°C at a temperature-rise rate of 5°C/minute while being rotated at a rotation rate of 10 rpm, and held for 24 hours, thereby producing silicoaluminophosphate particles. Furthermore, as a result of crushing the silicoaluminophosphate particles so as to obtain an average diameter of original silicoaluminophosphate particles of 4.0 $\mu$m, and treating the silicoaluminophosphate particles in an aqueous solution of ammonia with a concentration of 8% by mass for 30 minutes, the ratio of the amount of Si to the sum of the amounts of Al and P was 0.28, and the specific surface area was 190 m$^2$/g.

[Ratio of the amount of Si to the sum of the amounts of Al and P]

The ratio of the amount of Si to the sum of the amounts of Al and P in the silicoaluminophosphate particles was measured using a silicon drift energy dispersive X-ray detector XFlash5030 (manufactured by Bruker Corporation).

[Specific surface area]

The plot of the adsorption amount V [cm$^3$ (STP) $\cdot$g$^{-1}$] with respect to the relative pressure $P/P_0$, that is, the nitrogen adsorption and desorption isotherm was produced using an automatic surface area and porosimetry analyzer TriStar-3000 (manufactured by Shimadzu Corporation), and the specific surface area of the silicoaluminophosphate particles were obtained using a BET multipoint method. Specifically, the specific surface area was obtained from the plot of P/V ($P_0$-P) [g$\cdot$cm$^3$ (STP)$^{-1}$] with respect to the relative pressure $P/P_0$, that is, a BET plot.

[Average diameter of original silicoaluminophosphate particles]

The average diameter of original silicoaluminophosphate particles of the silicoaluminophosphate particles was measured using a laser diffraction particle size distribution analyzer MAS5001 (manufactured by Malvern Instruments Ltd.).

[Production of a honeycomb structure]

Each of the silicoaluminophosphate particles of the examples and the comparative examples were immersed in an aqueous solution of copper nitrate so as to be ion-exchanged with copper ions. The amount of the silicoaluminophosphate particles exchanged with copper ions was measured by carrying out ICP atomic emission spectrometry using an ICPS-8100 (manufactured by Shimadzu Corporation), and the amount was 2.7% by mass.

The silicoaluminophosphate particles ion-exchanged with copper ions (3000 parts), boehmite (1190 parts), an alumina fiber having an average fiber diameter of 6 $\mu$m and an average fiber length of 100 $\mu$m (720 parts), methyl cellulose (290 parts), oleic acid (310 parts) and ion exchange water (1820 parts) were mixed and kneaded, thereby producing raw material paste.

Next, the raw material paste was extruded using an extruder, thereby producing a honeycomb compact having a fan-like column shape. In addition, the honeycomb compact was dried at 110°C for 10 minutes using a microwave dryer and a hot air dryer, thereby producing a dried honeycomb. Furthermore, the honeycomb compact was defatted at 400°C for 5 minutes, thereby producing a defatted honeycomb. Next, the defatted honeycomb was fired in an atmosphere having a concentration of oxygen of 1% at 700°C for 8 hours, thereby producing a honeycomb unit. The honeycomb unit has a fan-like column shape with a radius of 132 mm, a center angle of 90° and a length of 76.2 mm, the thickness of a partition wall was 0.20 mm, and the density of through holes was 124 holes/cm$^2$.

Meanwhile, an alumina fiber having an average fiber diameter of 6 $\mu$m and an average fiber length of 100 $\mu$m (767 parts), silica glass (2500 parts), carboxymethyl cellulose (17 parts), a silica sol containing 30% by mass of a solid content (600 parts), a polyalcohol (167 parts) and an aluminum balloon (17 parts) were mixed and kneaded, thereby producing paste for the adhesion layer.

The paste for the adhesion layer was applied to the outer circumferential surface of the honeycomb unit excluding end surfaces so that the thickness of the adhesion layer 13 becomes 1.0 mm, four honeycomb units are adhered to each other, then, dried and solidified at 150°C for 10 minutes, thereby producing a circular column-shaped collection of the honeycomb units.

Furthermore, the paste for the adhesion layer was applied to the outer circumferential surface of the collection of the honeycomb units excluding end surfaces so that the thickness of the outer circumference coating layer 12 becomes 1.0 mm, then, the paste for the adhesion layer was dried, solidified at 150°C for 10 minutes using a microwave dryer and a hot air dryer, and defatted at 600°C for 1 hour, thereby producing a honeycomb structure.

[Cracking]

Whether cracking occurred in the honeycomb unit was visually evaluated. Meanwhile, a case in which cracking occurred was determined to be X, and a case in which cracking did not occur was determined to be O.

[NOx purification rate]

From the honeycomb unit, a circular column-shaped test specimen with a diameter of 25.4 mm and a length of 76.2 mm was cut using a diamond cutter.

The amount of NOx flowing out of the test specimen was measured using an automotive exhaust gas measuring apparatus MEXA-6000FT (manufactured by Horiba, Ltd.) while flowing a 200°C-hot simulant gas into the test specimen at a space velocity (SV) of 80000/h, and the purification rate [%] of NOx represented by a formula

$$(\text{the inflow amount of NOx} - \text{the outflow amount of NOx})/(\text{the inflow amount of NOx}) \times 100$$

was computed.

Meanwhile, the space velocity (SV) refers to the ratio of the flow rate [$m^3$/h] of the simulant gas to the apparent volume [$m^3$] of the test specimen, and the simulant gas contains nitrogen monoxide at a concentration of 350 ppm, ammonia at a concentration of 350 ppm, oxygen at a concentration of 10%, water at a concentration of 5% and carbon dioxide at a concentration of 5% with a balance of nitrogen.

Table 1 describes the evaluation results of the Si/(Al+P) of the sili.coaluminophosphate particles of Examples 1 to 7 (Examples 1 to 4, 6 and 7 are not according to the invention) and Comparative Example 1 to 6, the specific surface areas and areas average diameter of original silicoaluminophosphate particless of the silicoaluminophosphate particles, whether cracking occurred in the honeycomb structures, and the NOx purification rates of the honeycomb structures.

[Table 1] Examples marked with "*" are not according to the invention.

| | Silicoaluminophosphate particles | | | Honeycomb structure | |
|---|---|---|---|---|---|
| | Si/ (Al+P) | Specific surface area [$m^2$/g] | Average diameter of original silicoaluminophosphate particles[$\mu$m] | Cracking | Purification rate of NOx [%] |
| Example 1* | 0.16 | 320 | 4.0 | O | 88 |
| Example 2* | 0.16 | 355 | 2.0 | O | 89 |
| Example 3* | 0.16 | 310 | 6.0 | O | 87 |
| Example 4* | 0.16 | 210 | 4.0 | O | 85 |
| Example 5 | 0.24 | 330 | 4.0 | O | 93 |
| Example 6* | 0.24 | 280 | 6.0 | O | 87 |
| Example 7* | 0.28 | 385 | 2.0 | O | 95 |
| Comparative Example 1 | 0.15 | 420 | 4.0 | X | 86 |
| Comparative Example 2 | 0.15 | 345 | 4.0 | X | 78 |
| Comparative Example 3 | 0.16 | 415 | 4.0 | X | 90 |
| Comparative Example 4 | 0.16 | 320 | 1.0 | O | 80 |
| Comparative Example 5 | 0.24 | 287 | 8.0 | O | 77 |
| Comparative Example 6 | 0.28 | 190 | 4.0 | O | 75 |

Meanwhile, Si/(Al+P) refers to the ratio of the amount of Si to the sum of the amounts of Al and P.

It is found from Table 1 that, in the silicoaluminophosphate particles of Examples 1 to 7 (Examples 1 to 4, 6 and 7 are not according to the invention), the Si/(Al+P) is in a range of 0.16 to 0.28, the specific surface areas are in a range of 210 $m^2$/g to 385 $m^2$/g, and the average diameter of original silicoaluminophosphate particles are in a range of 2.0 μm to 6.0 μm, and, in the honeycomb structures produced using the silicoaluminophosphate particles of Examples 1 to 7, cracking does not occur in the honeycomb unit. Therefore, it is considered that the silicoaluminophosphate particles of Examples 1 to 7 can suppress the occurrence of cracking in the honeycomb unit which is induced by contraction and expansion caused by water adsorption and desorption. In addition, in the honeycomb structures produced using the silicoaluminophosphate particles of Examples 1 to 7, the NOx purification rates are in a range of 85% to 95%, and therefore it is found that the silicoaluminophosphate particles are excellent in terms of NOx purification performance.

On the other hand, it is found that, in the silicoaluminophosphate particles of Comparative Example 1, the Si/(Al+P) is 0.15, and the specific surface area is 420 $m^2$/g, and, in the honeycomb structure produced using the silicoaluminophosphate particles of Comparative Example 1, cracking occurs in the honeycomb unit. Therefore, it is considered that the silicoaluminophosphate particles of Comparative Example 1 cannot suppress the occurrence of cracking in the honeycomb unit which is induced by contraction and expansion caused by water adsorption and desorption.

It is found that, in the silicoaluminophosphate particles of Comparative Example 2, the Si/(Al+P) is 0.15, and, in the honeycomb structure produced using the silicoaluminophosphate particles of Comparative Example 2, cracking occurs in the honeycomb unit. Therefore, it is considered that the silicoaluminophosphate particles of Comparative Example 2 cannot suppress the occurrence of cracking in the honeycomb unit which is induced by contraction and expansion caused by water adsorption and desorption. In addition, in the honeycomb structure produced using the silicoaluminophosphate particles of Comparative Example 2, the NOx purification rate is 78%, and therefore it is found that the NOx purification performance degrades.

It is found that, in the silicoaluminophosphate particles of Comparative Example 3, the specific surface area is 415 $m^2$/g, and, in the honeycomb structure produced using the silicoaluminophosphate particles of Comparative Example 3, cracking occurs in the honeycomb unit. Therefore, it is considered that the silicoaluminophosphate particles of Comparative Example 3 cannot suppress the occurrence of cracking in the honeycomb unit which is induced by contraction and expansion caused by water adsorption and desorption.

It is found that, in the silicoaluminophosphate particles of Comparative Example 4, the average diameter of original silicoaluminophosphate particles is 1.0 μm, and, in the honeycomb structure produced using the silicoaluminophosphate particles of Comparative Example 4, the NOx purification rate is 80%, and therefore it is found that the NOx purification performance degrades.

It is found that, in the silicoaluminophosphate particles of Comparative Example 5, the average diameter of original silicoaluminophosphate particles is 8.0 μm, and, in the honeycomb structure produced using the silicoaluminophosphate particles of Comparative Example 5, the NOx purification rate is 77%, and therefore it is found that the NOx purification performance degrades.

It is found that, in the silicoaluminophosphate particles of Comparative Example 6, the specific surface area is 190 $m^2$/g, and, in the honeycomb structure produced using the silicoaluminophosphate particles of Comparative Example 6, the NOx purification rate is 75%, and therefore it is found that the NOx purification performance degrades.

Reference Signs List

| 10, 10', 10" | HONEYCOMB STRUCTURE |
| 11, 11', 11" | HONEYCOMB UNIT |
| 11a | THROUGH HOLE |
| 11b | PARTITION WALL |
| 12 | OUTER CIRCUMFERENCE COATING LAYER |
| 13 | ADHESION LAYER |
| 20 | HOLDING SEAL MATERIAL |
| 30 | METAL CONTAINER |
| 100 | EXHAUST GAS PURIFYING APPARATUS |

**Claims**

1. A honeycomb structure comprising:

   a honeycomb unit provided with a plurality of through holes arrayed in a longitudinal direction with a partition wall therebetween,
   wherein the honeycomb unit is produced by extruding and firing raw material paste containing silicoaluminophosphate particles and an inorganic binder, and wherein said silicoaluminophosphate particles have a ratio of an amount of Si to a sum of amounts of Al and P in a range of 0.22 to 0.26, a specific surface area in a range of 280 $m^2$/g to 330 $m^2$/g, and an average diameter in a range of 3.5 $\mu$m to 4.5 $\mu$m.

2. The honeycomb structure according to Claim 1,
   wherein the silicoaluminophosphate particles are ion-exchanged with copper ions and/or iron ions.

3. The honeycomb structure according to Claim 1 or 2,
   wherein, in the honeycomb unit, a content of the silicoaluminophosphate particles per apparent volume is in a range of 230 g/L to 360 g/L, and the apparent volume refers to a volume of an outer circumference including a volume of voids.

4. The honeycomb structure according to any one of Claims 1 to 3,
   wherein the inorganic binder is a solid content contained in one or more selected from a group consisting of an alumina sol, a silica sol, a titania sol, water glass, sepiolite, attapulgite and boehmite.

5. The honeycomb structure according to any one of Claims 1 to 4,
   wherein the raw material paste further contains one or more selected from a group consisting of inorganic fibers, scale-like substances, tetrapod-like substances and three dimensional needle-like substances.

6. The honeycomb structure according to Claim 5,
   wherein the inorganic fiber is one or more selected from a group consisting of alumina, silica, silicon carbide, silica alumina, glass, potassium titanate and aluminum borate, the scale-like substance is one or more selected from a group consisting of glass, muscovite, alumina and silica, the tetrapod-like substance is zinc oxide, and the three dimensional needle-like substance is one or more selected from a group consisting of alumina, silica, silicon carbide, silica alumina, glass, potassium titanate, aluminum borate and boehmite.

7. The honeycomb structure according to any one of Claims 1 to 6, comprising a plurality of the honeycomb units.

8. A method for manufacturing a honeycomb structure including a honeycomb unit provided with a plurality of through holes arrayed in a longitudinal direction with a partition wall therebetween, comprising:

   a step of extruding raw material paste containing silicoaluminophosphate particles and an inorganic binder; and
   a step of firing the extruded raw material paste so as to produce the honeycomb unit,
   wherein the silicoaluminophosphate particles have a ratio of an amount of Si to a sum of amounts of Al and P in a range of 0.22 to 0.26, a specific surface area in a range of 280 $m^2$/g to 330 $m^2$/g, and an average diameter in a range of 3.5 $\mu$m to 4.5 $\mu$m.

9. The method for manufacturing a honeycomb structure according to Claim 8,
   wherein, in an atmosphere in which the extruded raw material paste is fired, a concentration of oxygen is in a range of 1 % to 10 %, a temperature at which the extruded raw material paste is fired is in a range of 600°C to 1000°C, and a time during which the extruded raw material paste is fired is in a range of 7 hours to 10 hours.

10. An exhaust gas purifying apparatus,
    wherein the honeycomb structure according to any one of Claims 1 to 7 is accommodated in a metal container in a state in which a holding seal material is disposed on an outer circumferential surface of the honeycomb structure excluding both end surfaces.

11. Silicoaluminophosphate particles,
    wherein a ratio of an amount of Si to a sum of amounts of Al and P is in a range of 0.22 to 0.26, a specific surface area is in a range of 280 $m^2$/g to 330 $m^2$/g, and an average diameter is in a range of 3.5 $\mu$m to 4.5 $\mu$m.

**Patentansprüche**

1. Wabenstruktur, umfassend:

   eine Wabeneinheit, die mit einer Mehrzahl von Durchgangslöchern versehen ist, die in einer Längsrichtung angeordnet sind, wobei dazwischen eine Trennwand angeordnet ist,
   wobei die Wabeneinheit durch Extrudieren und Brennen einer Ausgangsmaterialpaste mit einem Gehalt an Siliciumaluminiumphosphat-Teilchen und einem anorganischen Bindemittel hergestellt ist, wobei die Siliciumaluminiumphosphat-Teilchen ein Verhältnis der Si-Menge zur Summe der Mengen an Al und P im Bereich von 0,22 bis 0,26, eine spezifische Oberfläche im Bereich von 280 m$^2$/g bis 330 m$^2$/g und einen durchschnittlichen Durchmesser im Bereich von 3,5 $\mu$m bis 4,5 $\mu$m aufweisen.

2. Wabenstruktur nach Anspruch 1,
   wobei die Siliciumaluminiumphosphat-Teilchen dem Ionenaustausch mit Kupferionen und/oder Eisenionen unterworfen worden sind.

3. Wabenstruktur nach Anspruch 1 oder 2,
   wobei in der Wabeneinheit der Anteil der Siliciumaluminiumphosphat-Teilchen pro scheinbares Volumen im Bereich von 230 g/Liter bis 360 g/Liter beträgt, wobei sich das scheinbare Volumen auf das Volumen des äußeren Umfangs unter Einschluss des Volumens von Leerräumen bezieht.

4. Wabenstruktur nach einem der Ansprüche 1 bis 3,
   wobei es sich beim anorganischen Bindemittel um einen festen Anteil handelt, der in einem oder mehreren Bestandteilen enthalten ist, die aus der aus einem Aluminiumoxid-Sol, einem Siliciumoxid-Sol, einem Titanoxid-Sol, Wasserglas, Sepiolith, Attapulgit und Böhmit bestehenden Gruppe ausgewählt sind.

5. Wabenstruktur nach einem der Ansprüche 1 bis 4,
   wobei die Ausgangsmaterialpaste ferner einen oder mehrere Bestandteile enhält, die aus der aus anorganischen Fasern, schuppenartigen Substanzen, tetrapodenartigen Substanzen und dreidimensionalen, nadelartigen Substanzen bestehenden Gruppe ausgewählt sind.

6. Wabenstruktur nach Anspruch 5,
   wobei es sich bei der anorganischen Faser um einen oder mehrere Bestandteile handelt, die aus der aus Aluminiumoxid, Siliciumoxid, Siliciumcarbid, Siliciumoxid-Aluminiumoxid, Glas, Kaliumtitanat und Aluminiumborat bestehenden Gruppe ausgewählt sind, wobei es sich bei der schuppenartigen Substanz um einen oder mehrere Bestandteile handelt, die aus der aus Glas, Muscovit, Aluminiumoxid und Siliciumoxid bestehenden Gruppe ausgewählt sind, wobei es sich bei der tetrapodenartigen Substanz um Zinkoxid handelt und wobei es sich bei der dreidimensionalen, nadelartigen Substanz um einen oder mehrere Bestandteile handelt, die aus der aus Aluminiumoxid, Siliciumoxid, Siliciumcarbid, Siliciumoxid-Aluminiumoxid, Glas, Kaliumtitanat, Aluminiumborat und Böhmit bestehenden Gruppe ausgewählt sind.

7. Wabenstruktur nach einem der Ansprüche 1 bis 6, umfassend eine Mehrzahl von Wabeneinheiten.

8. Verfahren zur Herstellung einer Wabenstruktur, die eine Wabeneinheit umfasst, die mit einer Mehrzahl von Durchgangslöchern versehen ist, die in einer Längsrichtung angeordnet sind, wobei dazwischen eine Trennwand angeordnet ist, umfassend:

   eine Stufe, bei der eine Ausgangsmaterialpaste mit einem Gehalt an Siliciumaluminiumphosphat-Teilchen und einem anorganischen Bindemittel extrudiert wird; und
   eine Stufe, bei der die extrudierte Ausgangsmaterialpaste zur Bildung einer Wabenstruktur gebrannt wird, wobei die Siliciumaluminiumphosphat-Teilchen ein Verhältnis der Si-Menge zur Summe der Mengen an Al und P im Bereich von 0,22 bis 0,26, eine spezifische Oberfläche im Bereich von 280 m$^2$/g bis 330 m$^2$/g und einen durchschnittlichen Durchmesser im Bereich von 3,5 $\mu$m bis 4,5 $\mu$m aufweisen.

9. Verfahren zur Herstellung einer Wabenstruktur nach Anspruch 8,
   wobei in einer Atmosphäre, in der die extrudierte Ausgangsmaterialpaste gebrannt wird, die Sauerstoffkonzentration im Bereich von 1 % bis 10 % liegt, die Temperatur, bei der die extrudierte Ausgangsmaterialpaste gebrannt wird, im Bereich von 600 °C bis 1000 °C liegt und die Zeitspanne, in der die extrudierte Ausgangsmaterialpaste gebrannt wird, im Bereich von 7 Stunden bis 10 Stunden liegt.

**10.** Abgasreinigungsvorrichtung,
bei der die Wabenstruktur nach einem der Ansprüche 1 bis 7 sich in einem Metallbehälter in einem Zustand befindet, bei dem ein die Struktur haltendes Dichtungsmaterial auf einer äußeren Umfangsfläche der Wabenstruktur, ausgenommen die beiden Endflächen, angeordnet ist.

**11.** Siliciumaluminiumphosphat-Teilchen,
wobei das Verhältnis der Si-Menge zur Summe der Mengen an Al und P im Bereich von 0,22 bis 0,26 liegt, die spezifische Oberfläche im Bereich von 280 m$^2$/g bis 330 m$^2$/g liegt und der durchschnittliche Durchmesser im Bereich von 3,5 $\mu$m bis 4,5 $\mu$m liegt.

## Revendications

**1.** Une structure en nid d'abeilles comprenant :

une unité en nid d'abeilles dotée d'une pluralité de trous traversants agencés dans la direction longitudinale avec une séparation entre eux,
dans laquelle l'unité en nid d'abeilles est produite par extrusion et cuisson d'une pâte de matière première contenant des particules de silico-alumino-phosphate et un liant inorganique, et dans laquelle lesdites particules de silico-alumino-phosphate ont un rapport de la quantité de Si à la somme des quantités d'Al et de P situé dans la plage allant de 0,22 à 0,26, une surface spécifique située dans la plage allant de 280 m$^2$/g à 330 m$^2$/g, et un diamètre moyen situé dans la plage allant de 3,5 $\mu$m à 4,5 $\mu$m.

**2.** La structure en nid d'abeilles selon la revendication 1, dans laquelle les particules de silico-alumino-phosphate ont subi un échange d'ions avec des ions cuivre et/ou des ions fer.

**3.** La structure en nid d'abeilles selon la revendication 1 ou 2, dans laquelle, dans l'unité en nid d'abeilles, la teneur en les particules de silico-alumino-phosphate par volume apparent est située dans la plage allant de 230 g/l à 360 g/l, et le volume apparent se réfère au volume de la circonférence extérieure englobant le volume des vides.

**4.** La structure en nid d'abeilles selon l'une quelconque des revendications 1 à 3,
dans laquelle le liant inorganique est un contenu solide qui est contenu dans un ou plusieurs choisis dans le groupe constitué par un sol d'alumine, un sol de silice, un sol d'oxyde de titane, le verre soluble, la sépiolite, l'attapulgite et la boehmite.

**5.** La structure en nid d'abeilles selon l'une quelconque des revendications 1 à 4,
dans laquelle la pâte de matière première contient en outre un ou plusieurs choisis dans le groupe constitué par les fibres inorganiques, les substances squamiformes, les substances en forme de Tetrapot et les substances aciculaires tridimensionnelles.

**6.** La structure en nid d'abeilles selon la revendication 5,
dans laquelle la fibre inorganique est une ou plusieurs choisies dans le groupe constitué par l'alumine, la silice, le carbure de silicium, la silice-alumine, le verre, le titanate de potassium et le borate d'aluminium, la substance aciculaire est une ou plusieurs choisies dans le groupe constitué par le verre, la muscovite, l'alumine et la silice, la substance en forme de Tetrapot est l'oxyde de zinc, et la substance aciculaire tridimensionnelle est une ou plusieurs choisies dans le groupe constitué par l'alumine, la silice, le carbure de silicium, la silice-alumine, le verre, le titanate de potassium, le borate d'aluminium et la boehmite.

**7.** La structure en nid d'abeilles selon l'une quelconque des revendications 1 à 6, comprenant une pluralité de motifs en nid d'abeilles.

**8.** Une méthode de fabrication une structure en nid d'abeilles comprenant une unité en nid d'abeilles dotée d'une pluralité de trous traversants agencés dans la direction longitudinale avec une séparation entre eux, comprenant :

une étape consistant à extruder une pâte de matière première contenant des particules de silico-alumino-phosphate et un liant inorganique ; et

une étape consistant à cuire la pâte de matière première extrudée de façon à produire l'unité en nid d'abeilles, dans lequel les particules de silico-alumino-phosphate ont un rapport de la quantité de Si à la somme des quantités d'Al et de P situé dans la plage allant de 0,22 à 0,26, une surface spécifique située dans la plage allant de 280 m²/g à 330 m²/g, et un diamètre moyen situé dans la plage allant de 3,5 μm à 4,5 μm.

9. La méthode de fabrication d'une structure en nid d'abeilles selon la revendication 8,
dans lequel, dans l'atmosphère dans laquelle la pâte de matière première extrudée est cuite, la concentration d'oxygène est située dans la plage allant de 1 % à 10 %, la température à laquelle la pâte de matière première extrudée est cuite est située dans la plage allant de 600°C à 1000°C, et le temps durant lequel la pâte de matière première extrudée est cuite est situé dans la plage allant de 7 heures à 10 heures.

10. Un dispositif de purification de gaz d'échappement,
dans lequel la structure en nid d'abeilles selon l'une quelconque des revendications 1 à 7 est logée dans un récipient métallique dans un état dans lequel un matériau d'étanchéité et de retenue est disposé sur une surface circonférentielle extérieure de la structure en nid d'abeilles à l'exclusion des deux surfaces d'extrémité.

11. Particules de silico-alumino-phosphates,
dans lesquelles le rapport de la quantité de Si à la somme des quantités d'Al et de P est situé dans la plage allant de 0,22 à 0,26, la surface spécifique est située dans la plage allant de 280 m²/g à 330 m²/g, et le diamètre moyen est situé dans la plage allant de 3,5 μm à 4,5 μm.

# FIG. 1

# FIG. 2

EXHAUST GAS

# FIG. 3

<u>10'</u>

12

13

11'

# FIG. 4

<u>11'</u>

11a

11b

## FIG. 5

<u>10"</u>

12

13

11"

## FIG. 6

<u>11"</u>

11a

11b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 06137149 A
- US 20100310440 A1
- EP 2324916 A1